# EUROPEAN PATENT SPECIFICATION

(11) **EP 3 197 710 B1**
(45) Date of publication and mention of the grant of the patent: **13.06.2018**
(21) Application number: 15862149.0
(22) Date of filing: 02.12.2015
(51) Int. Cl.: B60N 2/18

(54) **A GRADUAL ANGULAR POSITION ADJUSTING MECHANISM FOR A SEATING SURFACE OF CAR SEATS**
SCHRITTWEISER WINKELPOSITIONSEINSTELLMECHANISMUS FÜR EINE SITZFLÄCHE VON KRAFTFAHRZEUGSITZEN
MÉCANISME DE RÉGLAGE DE POSITION ANGULAIRE GRADUELLE POUR UNE SURFACE D'ASSISE DE SIÈGES DE VOITURE

(43) Date of publication of application: 02.08.2017
(73) Proprietor: Assan Hanil Otomotiv Sanayi Ve Ticaret Anonim Sirketi, Izmit, Kocaeli (TR)
(72) Inventor: ILMAN, Ercan, 41305 Izmit/Kocaeli (TR); AKBABA, Ugur, 41305 Izmit/Kocaeli (TR); ARKIN, Erman, 41305 Izmit/Kocaeli (TR); YURDDAS, Ali Ihsan, 41305 Izmit/Kocaeli (TR); KADAS, Serkan, 41305 Izmit/Kocaeli (TR); GÜNER, Aykut, 41305 Izmit/Kocaeli (TR); YALÇIN, Çagdas, 41305 Izmit/Kocaeli (TR); DEMIREL, Onur Emre, 41305 Izmit/Kocaeli (TR); ÖZCAN, Zafer Serhat, 41305 Izmit/Kocaeli (TR)
(74) Representative: Yamankaradeniz, Kemal
(86) International application number: PCT/TR2015/050224
(87) International publication number: WO 2017/095339

(56) References cited:
- EP-A2- 0 173 044
- US-A1- 2012 146 379
- US-B1- 6 186 572

## Description

### TECHNICAL FIELD

The present invention relates to a position adjusting mechanism which adjusts the position of the car seats.

In particularly, the present invention relates to a position adjusting mechanism which adjusts the seating parts of the car seats back and forth angularly and gradually.

### STATE OF THE ART

In motor vehicles it is required that a driver seat should be adjusted according to driver's physical characteristics and ride comfort. Said adjustment is performed via seat adjusting mechanisms connected to the seating or reclining parts. The seat adjusting mechanisms generally divided into two groups: rotational adjusting mechanisms which adjust the angle of seating or reclining part of the seat and linear adjusting mechanisms which are actuated from the seating part of the seat and which adjust linear position of the seat integrally.

In the prior art, the position adjusting mechanism eliminates the mechanism via a triggering mechanism. A driver or passenger inclines the seating part according to an appropriate position with self-weight thereof after feeling the sense of space. In this case this usage may be affected adversely by the fact that the driver or passenger feels the sense of space suddenly and the steps are not felt.

There are some applications relating to seat adjusting mechanism in national and international literature. In these applications various mechanisms are used in order to adjust the height and incline of the seating part of the seat. Among these mechanisms the ones used for adjusting the incline of the seating part are grouped as electrical, electronical, hydraulic and mechanical (manual) depending on the triggering system.

The application numbered TR200605909 among international applications relates to a seat inclination adjusting mechanism which is developed for use especially in public transportation vehicles and cargo carriage vehicles and which adjusts the seating surface inclination of the driver seat angularly. In this application a scissor type structure is used and is actuated by a gas springs.

The international application US2012146379 includes a motor actuating the mechanism; a worm gear mechanism connected to said motor; and a lever arm connected to said worm gear mechanism, wherein the triggering process is performed by the motor. The application numbered US2013169015 includes a motor actuating the mechanism; a worm gear mechanism connected to said motor; and a grooved arm connected to said worm gear. In this application the worm gear mechanism moves by the motor drive. The grooved arm connected to the pinion gear of said worm gear mechanism moves in a downward and upward direction by meshing with the grooves of the pinion gear. The application numbered AU734034 basically consists of a triggering arm; a connecting rod connected to said triggering arm; a cam connected to said connecting rod; a stopper connected to said cam; a pivot arm-1 connected to said stopper, spring and a pivot arm-2. In this application triggering is performed mechanically; however there is no stepping during adjustment of the seating part.

Furthermore, document EP0173044 discloses a position adjusting mechanism for adjusting inclination of a seating part according to the preamble of claim 1. As a result there is a need for a development in the technical field with respect to above-mentioned problems and lack of solution.

### THE OBJECT OF THE INVENTION

The object of the invention is to solve the above-mentioned problems, to eliminate all disadvantages and to provide additional advantages for the structure.

The object of the invention is to adjust the seating part inclination of the car seats while this adjustment is performed gradually. To achieve this object a step gear has been developed which has a grooved structure and is engaged to the gear via this grooved part.

The desired inclination adjustment by an end user is efficiently performed by feeling the geometrical stepping inside the part during angular movement with the aid of the invention. These stepping processes are carried out shape-dependent structure of the step gear with the gear.

With this invention the system moves in a balanced way. Thus, the adjustment may be performed in a comfortable way as the mechanism is not eliminated during system operation. The structural and characteristic features, operating principle and the advantages of the invention will be clearly understood with respect to the figures provided below and the detailed description provided by referring to these figures. Thus an evaluation should be made by taking into consideration these figures and the detailed description.

### BRIEF DESCRIPTION OF THE FIGURES

Figure 1 shows the interlocked form of the inner frame and the outer frame.
Figure 2 shows the outer frame separately.
Figure 3 shows the inner fame separately.
Figure 4 shows the demounted form of the inner frame.
Figure 5 shows the main parts of the outer frame and the inclination mechanism.
Figure 6 shows the main parts of the actuating mechanism in a closed configuration.
Figure 7 shows the main parts of the actuating mechanism in an open configuration.
Figure 8 shows the engaged form of the locking arm of the actuating mechanism to the step lock.
Figure 9 shows the locked position of the actuating mechanism.
Figure 10 shows only the lock-open position of the locking arm of the actuating mechanism.
Figure 11 shows the completely lock-open position of the actuating mechanism
Figure 12 shows the completely lock-open position of the actuating mechanism and the upmost step position of the outer frame.
Figure 13 shows the completely locked position of the actuating mechanism and the upmost step position of the outer frame.
Figure 14 shows the upmost step position of the outer frame.
Figure 15 shows the lowermost step position of the outer frame.

**REFERENCE NUMBERS**

| | |
|---|---|
| 1. Position adjusting mechanism | 330. Actuating mechanism |
| 2. Connecting member | 331. Inner plate |
| 3. First hole (Hole-1) | 3311. Connecting bracket-2 |
| 100. Inner frame | 332. Casing plate |
| 110. Step gear | 333. Triggering arm |
| 111. Connecting channel | 334. Pin |
| 112. Lock fork | 335. Gear |
| 113. Vertical side | 336. Step lock |
| 114.Serrated surfaces | 3361. Locking pin |
| 120. Casing member | 3362. Locking arc |
| 200. Outer frame | 3363. Locking bulge |
| 210. Connecting bracket-1 | 337. Main arm |
| 220. Spring channel | 3371. Connecting channel |
| 230. Second hole (Hole-2) | 3372. Locking channel |
| 240. Third hole (Hole-3) | 338. Locking arm |
| 250. Connecting member | 339. Washer |
| 300. Inclination mechanism | |
| 310. Connecting shaft | |
| 320. Spring | |

### DETAILED DESCRIPTION OF THE INVENTION

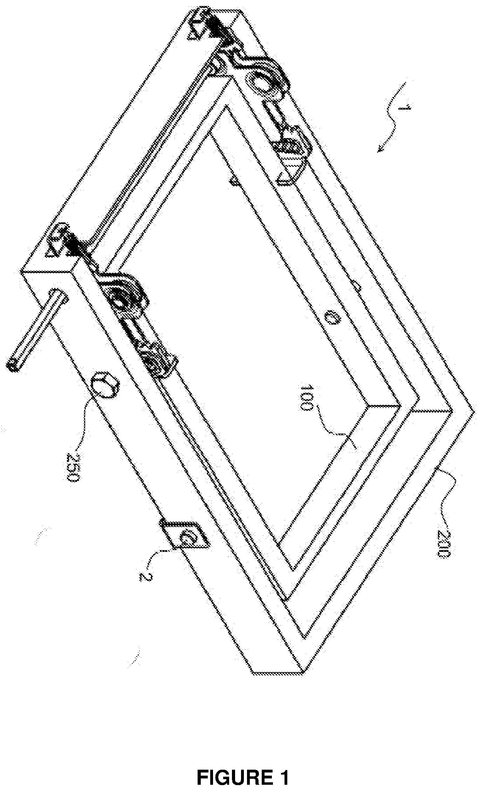

The position adjusting mechanism (1) is a mechanism which adjusts the seating part of car seats ergonomically depending on a certain angle according to the sitter. Said position adjusting mechanism (1) generally comprises an inner frame (100), an outer frame (200) and an inclination mechanism (300). The inner frame (100) fits into the outer frame (210) which are connected together via a connecting member (2) such that hole-1s (3) are concentric. Thus, the outer frame (210) performs a rotational movement in a clockwise or counterclockwise direction at a certain angle around a center, with the connecting member (2) being the center. Said connecting member (2) is a bolt (See, figure 1, figure 14, figure 15).

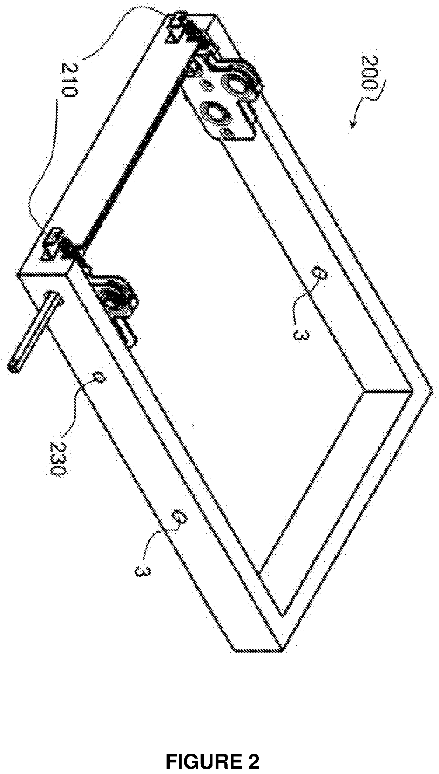

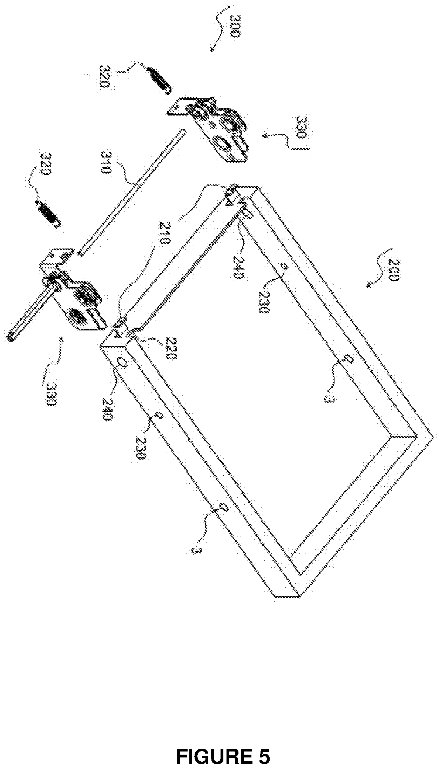

The outer frame (210) has a certain wall thickness and includes hole-1s (3), hole-2s (230) and a hole-3 (240) drilled obliquely in an opposing and concentric way on the long sides thereof. The connecting member (250) extends into the connecting channel (111) passing through the both sides from said hole-2 (230). Said connecting member (250) is a bolt. The connecting bracket-Is (210) are connected to the short back side of said outer frame (210). A spring channel (220) opening into the short back side is located on the connecting bracket-1s (210) (See figure 2, figure 5).

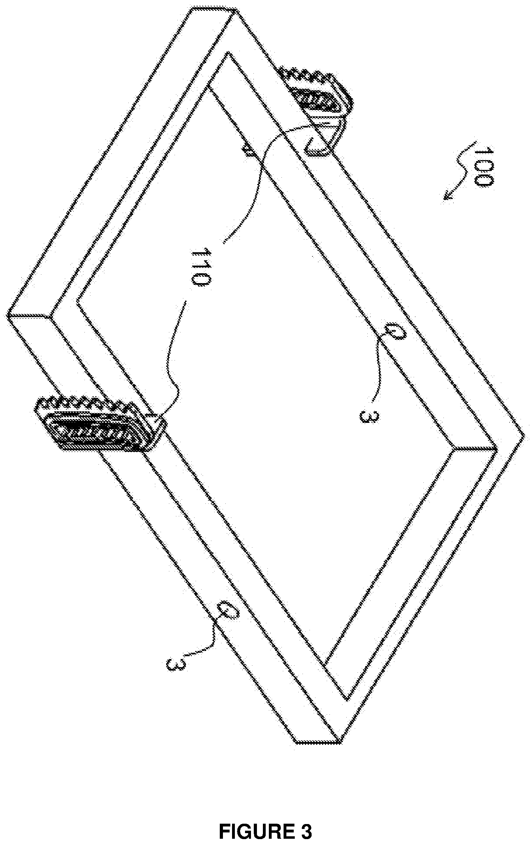

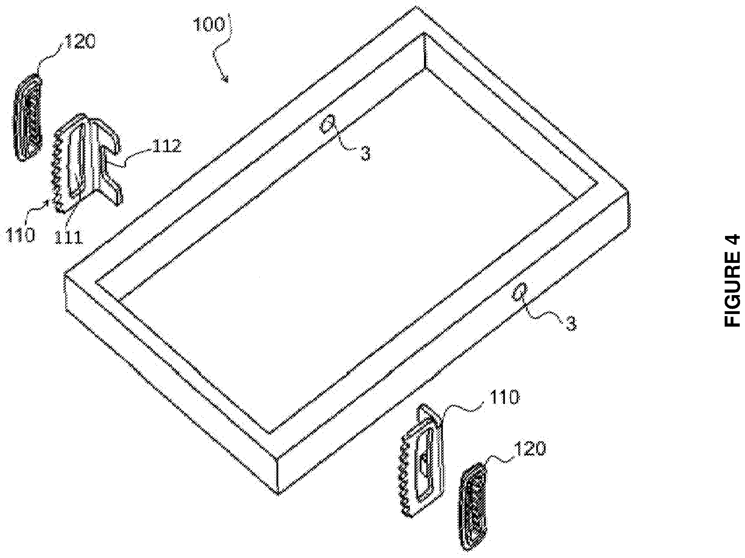

The inner frame (100) generally comprises a step gear (110) and a casing member (120). The inner frame (110) has a certain wall thickness and includes hole-1's (3) drilled obliquely in an opposing and concentric way on the long sides thereof. The step gear (110) has "L-shaped" geometry and comprises a connecting channel (111) and a lock fork (112). Said casing member (120) locking to the connecting channel (111). Said step gear (110) is fixed by welding to the inner frame (100) by the lock fork (112). This fixation is carried out by taking into consideration the hole-2 (230). Thus, step gear (110) is fixed to the inner frame (100) by centering the connecting channel (111) to the hole-2 (230) (See figure 3, figure 4). Said lock fork (112) is in one piece with the step gear (110) by a bending method. The lock fork (112) has a connecting channel (111) which has a curved form compared to the vertical side (113). However the casing member (120) interlocking with said step gear (110) has serrated surfaces (114).

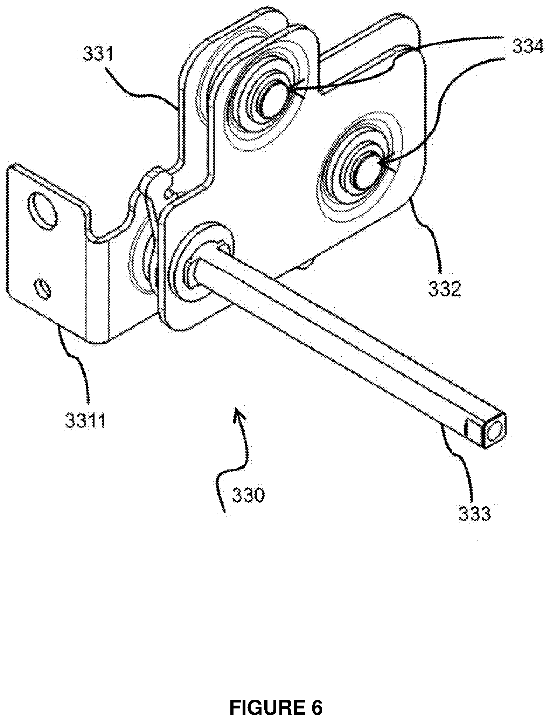

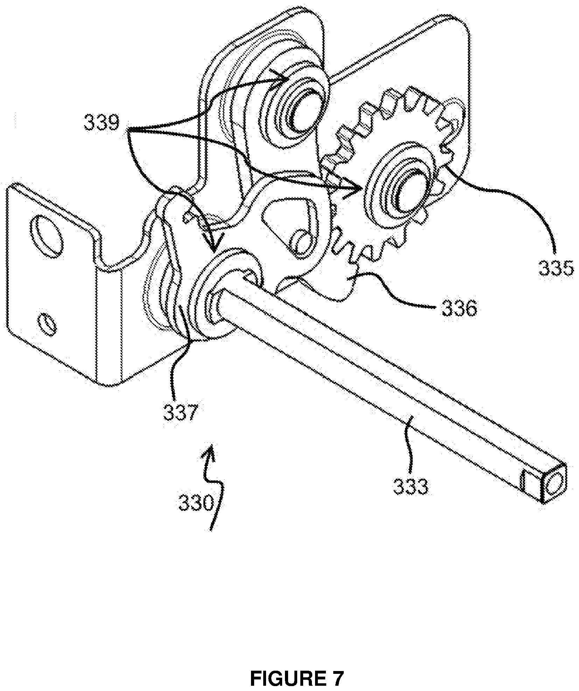

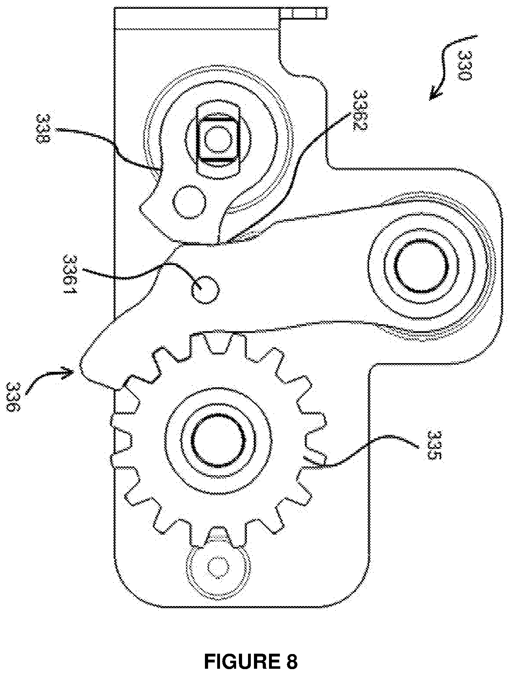

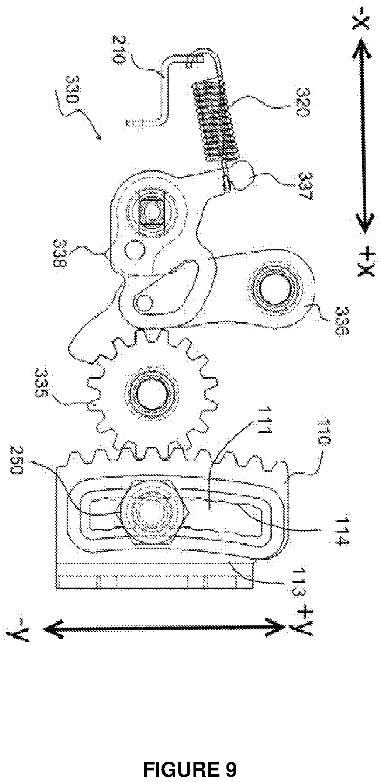

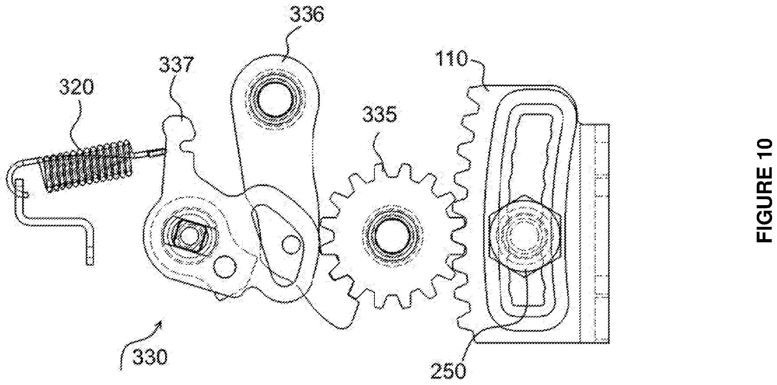

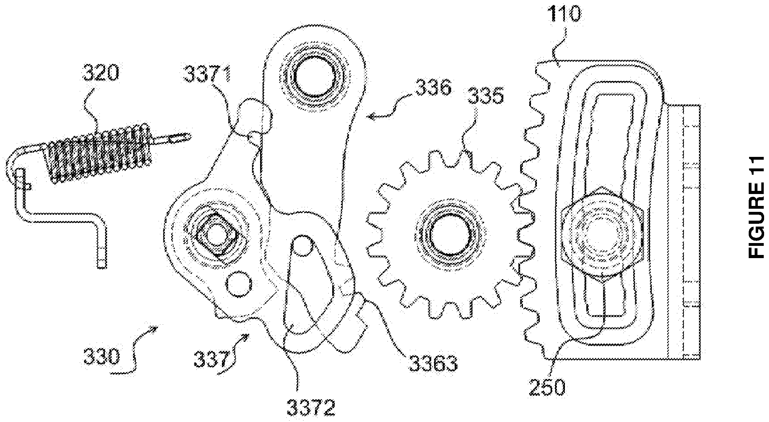

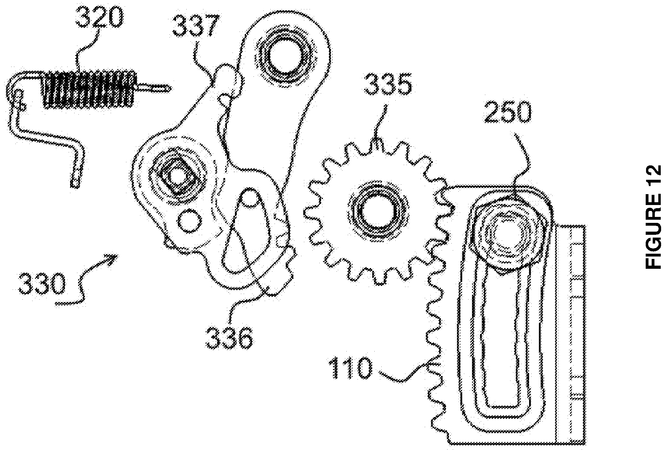

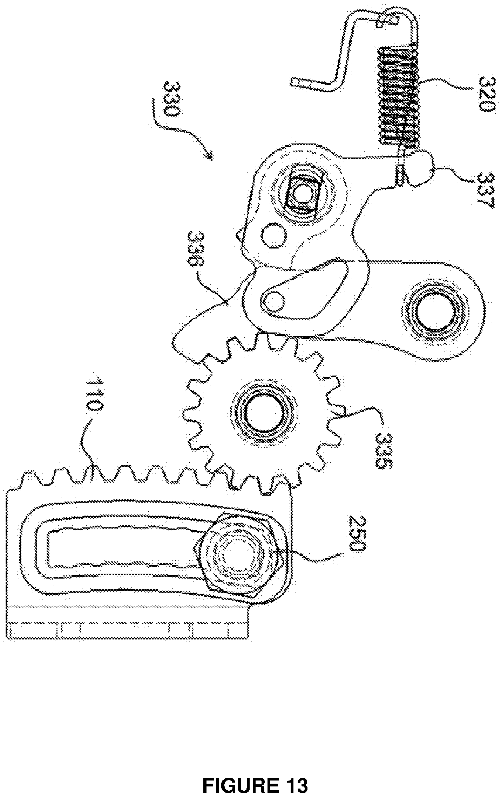

The inclination mechanism (300) is connected to the outer frame (200) from the inner side of the lateral sides thereof and is a two-part mechanism which generally comprises actuating mechanisms (330), a connecting shaft (310) and springs (320). The actuating mechanisms (330) are connected to each other by the connecting shaft (310). Thus, the actuating mechanisms (330) operate in synchronism. The actuating mechanism (330) is a mechanism which is located on the long sides of the outer frame (200) symmetrically in an opposite direction and in a mirrored way. The actuating mechanism (330) comprises an inner plate (331), a casing plate (332), a triggering arm (333), a gear (335), a step lock (336), a main arm (337), a locking arm (338), a washer (339) and pins (334). The actuating mechanism (330) has a sandwich type structure comprises a gear (335), a step lock (336), a main arm (337) and a locking arm (338) located between the inner plate (331) and the casing plate (332) by the pins (334) and washers (339). Said actuating mechanism (330) is fixed to the short back side of the outer frame (200) by welding the inner plate (331) to the connecting bracket-2's (3311) contained in the inner plate (331). The triggering arm (333) is connected to actuating mechanism (330) on the right side and centered to the same hole as the main arm (337) and the locking arm (338). Said triggering arm (333) extends into the hole-3 (240) in order to trigger the inclination mechanism (300) manually. The inner plate (331) and the casing plate (332) have a special profile structure. The main arm (337) has a special geometry and is connected to the inner plate (331) concentrically with the locking arm (338). Said main arm (337) is locks to the spring (320) via the connecting channel (3371) and locks the locking pin (3361) located on the step lock (336) via the locking channel (3372). Said locking arm (338) is locking to the locking arc (3362) located on the back of said step lock (336). Similarly, said step lock (336) is connected to the inner plate (331). Said step lock (336) has a special geometry and a partially grooved structure with the locking bulge (3363), wherein the step lock has a locking pin (3361) thereon and a locking arc (3362) on the back thereof. Said locking bulge (3363) is engaged to the gear (335). Said gear (335) is connected to the inner plate (331) while on one side it is engaged to the step lock (336) and on the other side it is engaged to the step gear (110). Said springs (320) are connected to the connecting bracket-1 (210) from one end thereof while the other end is connected to the connecting channel (3371) located on the main arm (337) by passing through the spring channel (220) (See figure 5, figure 6, figure 7, figure 8, figure 9, figure 10, figure 11, figure 12, figure 13).

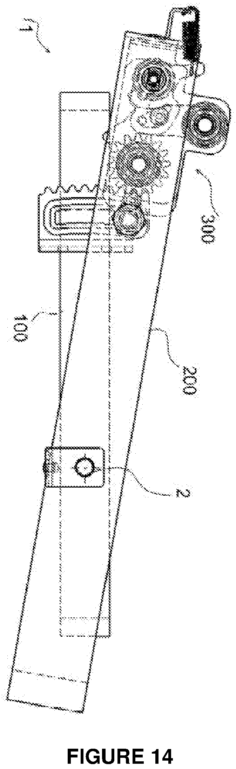

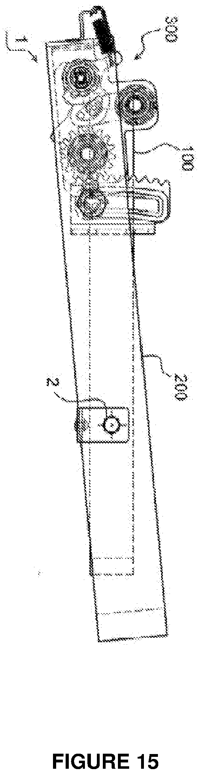

The operating principle of the position adjusting mechanism (1) is as follows: the locking arm (338) which holds the step gear (110) via the locking arc (3362) performs a rotational movement by triggering said triggering arm (333) manually by a user. Thus, the step gear (110) is released. Thereafter the released spring (320) forces the main arm (337) in the direction of +x. Then, the main arm (337) performs a partial rotation in clockwise direction. The locking channel (3372) of said main arm (337) forces the step lock (336) to partially rotate in clockwise direction by holding to the locking pin (3361) with the aid of spring force. Thereby the gear (335) is released. Thereafter the user adjusts the seating part by rotating it in clockwise or counterclockwise direction with the aid of self-weight thereof. The connecting member (250) moves inside the connecting channel (111) in the direction of (+y) or (-y) during the adjustment process. Thus, the gear (335) enables the user to feel the steps by moving in the step gear (110) bulges. By releasing the triggering arm (333) the locking arm (338) relocks the system by interlocking with the locking arc (3362) of the step lock (336). Thereby the seating part is in the locked position with the position thereof has been adjusted (See figure 14, figure 15).

## Claims

1. A position adjusting mechanism (1) which adjusts the inclination of a seating part of the car seats comprises:
- an outer frame (200);
- connecting bracket-Is (210) connected to said outer frame (200); an inner frame (100) interlocking with said outer frame (200);
- a connecting member (2) which fastens said outer frame (200) to the inner frame (100) from both side by means of a first hole (3);
- an inner plate (331), a casing plate (332) wherein the inner plate(331) and the casing plate(332) are located at the outer frame (200) in an opposite direction and in a mirrored way;
- a gear (335) located between said inner plate (331) and the casing plate (332) by pins (334) and washers (339);
- a main arm (337) including a connection channel (3371) and a locking channel (3372);
- two actuating mechanisms (330) having a sandwich type structure which are engaged to said gear (335) by means of a locking bulge (3363) and which consist of a step lock (336) fitted to the locking channel (3372) by a lock pin (3361);
- a connecting shaft (310) interconnecting said actuating mechanisms (330);
- a triggering arm (333) which provides detachment of said step lock (336) from the gear (335) and extends into the outer frame (200) by means of a third hole (240); and
- an inclination mechanism (300) consisting of two springs (320) with one end thereof connected to each connecting channel (3371) of said main arm (337) and the other end thereof connected to each connecting bracket (210);
**characterized in** comprising:
- a locking arc (3362) formed on a back part of said step lock (336) facing the triggering arm (333),
- a locking arm (338) which enters the locking arc (3362) and exits the locking arc (3362),
- a step gear (110) onto which a connecting channel (111) is located, wherein the step gear(110) is fastened to said inner frame (100) and is engaged to the gear (335) by means of a grooved structure thereof,
- a connecting member (250) which moves in the connecting channel (111) of said step gear (110) and extends into the connecting channel from the outer frame (200) by means of a second hole (230).

2. A position adjusting mechanism (1) according to claim 1, **characterized in** comprising a lock fork (112) which connects said step gear (110) to the inner frame (100).

3. A position adjusting mechanism (1) according to claim 2, **characterized in** comprising a lock fork (112) which is in one piece with said step gear (110) and is formed by a bending method.

4. A position adjusting mechanism (1) according to claim 2, **characterized in** said lock fork (112) comprising a connecting channel (111) which has a curved form compared to the vertical side (113).

5. A position adjusting mechanism (1) according to claim 1, **characterized in** comprising a casing member (120) which is locked with said step gear (110).

6. A position adjusting mechanism (1) according to claim 5, **characterized in** said casing member (120) comprising serrated surfaces (114).

7. A position adjusting mechanism (1) according to claim 6, **characterized in** comprising a casing member (120) made of plastics and plastic-based materials.

## Patentansprüche

1. Positionseinstellmechanismus (1), der die Neigung eines Sitzteils von Kraftfahrzeugsitzen einstellt, umfassend:
- einen äußeren Rahmen (200);
- Verbindungsklammern (210), die mit dem äußeren Rahmen (200) verbunden sind; einen inneren Rahmen (100), der mit dem äußeren Rahmen (200) eingreift;
- ein Verbindungselement (2), das den äußeren Rahmen (200) von beiden Seiten eines ersten Lochs (3) an dem inneren Rahmen (100) befestigt;
- eine innere Platte (331), eine Gehäuseplatte (332), wobei die innere Platte (331) und die Gehäuseplatte (332) in entgegengesetzter Richtung und spiegelbildlich an dem äußeren Rahmen (200) angeordnet sind;
- ein Zahnrad (335), das durch Stifte (334) und Unterlegscheiben (339) zwischen der inneren Platte (331) und der Gehäuseplatte (332) angeordnet ist;
- einen Hauptarm (337) mit einem Verbindungskanal (3371) und einem Verriegelungskanal (3372);
- zwei Betätigungsmechanismen (330) mit einer Sandwich-Konstruktion, die über eine Verriegelungsauskragung (3363) mit dem Zahnrad (335) eingreifen, und die eine Stufenverriegelung (336) aufweisen, die über einen Verriegelungsstift (3361) an dem Verriegelungskanal (3372) vorgesehen ist;
- eine Verbindungswelle (310), welche die Betätigungsmechanismen (330) miteinander verbindet;
- einen Auslösearm (333), der eine Trennung der Stufenverriegelung (336) von dem Zahnrad (335) vorsieht und sich über ein drittes Loch (240) in den äußeren Rahmen (200) erstreckt; und
- einen Neigungsmechanismus (300), der aus zwei Federn (320) besteht, wobei ein Ende davon mit jedem Verbindungskanal (3371) des Hauptarms (337) verbunden ist, und wobei das andere Ende mit jeder Verbindungsklammer (210) verbunden ist;
**dadurch gekennzeichnet, dass** der Mechanismus folgendes umfasst:
- einen Verriegelungsbogen (3362), der an einem hinteren Teil der Stufenverriegelung (336) ausgebildet ist, der zu dem Auslösearm (333) zeigt;
- einen Verriegelungsarm (338), der in den Verriegelungsbogen (3362) eintritt und aus dem Verriegelungsbogen (3362) austritt;
- ein Stufengetriebe (110), an dem ein Verbindungskanal (111) angeordnet ist, wobei das Stufengetriebe (110) an dem inneren Rahmen (100) befestigt ist und mit dem Zahnrad (335) über eine Rillenstruktur eingreift;
- ein Verbindungselement (250), welches sich in dem Verbindungskanal (111) des Stufengetriebes (110) bewegt und sich von dem äußeren Rahmen (200) durch ein zweites Loch (230) in den Verbindungskanal erstreckt.

2. Positionseinstellmechanismus (1) nach Anspruch 1, **dadurch gekennzeichnet, dass** dieser eine Verriegelungsgabel (112) umfasst, welche das Stufengetriebe (110) mit dem inneren Rahmen (100) verbindet.

3. Positionseinstellmechanismus (1) nach Anspruch 2, **dadurch gekennzeichnet, dass** dieser eine Verriegelungsgabel (112) umfasst, die mit dem Stufengetriebe (110) einteilig ist und durch ein Biegeverfahren gebildet wird.

4. Positionseinstellmechanismus (1) nach Anspruch 2, **dadurch gekennzeichnet, dass** die Verriegelungsgabel (112) einen Verbindungskanal (111) umfasst, der im Vergleich zu der vertikalen Seite (113) eine gekrümmte Form aufweist.

5. Positionseinstellmechanismus (1) nach Anspruch 1, **dadurch gekennzeichnet, dass** dieser ein Gehäuseelement (120) umfasst, das mit dem Stufengetriebe (110) verriegelt ist.

6. Positionseinstellmechanismus (1) nach Anspruch 5, **dadurch gekennzeichnet, dass** das Gehäuseelement (120) gezahnte Oberflächen (114) umfasst.

7. Positionseinstellmechanismus (1) nach Anspruch 6, **dadurch gekennzeichnet, dass** dieser ein Gehäuseelement (120) aus Kunststoffen oder aus Materialien auf Kunststoffbasis umfasst.

## Revendications

1. Mécanisme de réglage de position (1) qui règle l'inclinaison d'une partie d'assise des sièges de voiture comprenant :
un cadre extérieur (200) ;
un support de liaison-1s (210) relié audit cadre extérieur (200) ; un cadre intérieur (100) imbriqué avec ledit cadre extérieur (200) ;
un élément de liaison (2) qui fixe ledit cadre extérieur (200) au cadre intérieur (100) des deux côtés au moyen d'un premier trou (3) ;
une plaque intérieure (331), une plaque de boîtier (332), la plaque intérieure (331) et la plaque de boîtier (332) étant situées au niveau du cadre extérieur (200) dans une direction opposée et en miroir ;
un engrenage (335) situé entre ladite plaque intérieure (331) et la plaque de boîtier (332) par des broches (334) et des rondelles (339) ;
un bras principal (337) comprenant un canal de liaison (3371) et un canal de verrouillage (3372) ;
deux mécanismes d'actionnement (330) ayant une structure de type sandwich qui sont en prise avec ledit engrenage (335) au moyen d'un renflement de verrouillage (3363) et qui consistent en un verrou à pas (336) monté sur le canal de verrouillage (3372) par une goupille de verrouillage (3361) ;
un arbre de liaison (310) reliant lesdits mécanismes d'actionnement (330) ;
un bras de déclenchement (333) qui assure le détachement dudit verrou à pas (336) de l'engrenage (335) et qui s'étend dans le cadre extérieur (200) au moyen d'un troisième trou (240) ; et
un mécanisme d'inclinaison (300) constitué de deux ressorts (320) dont une extrémité est reliée à chaque canal de liaison (3371) dudit bras principal (337) et dont l'autre extrémité est reliée à chaque support de liaison (210) ;
**caractérisé en ce qu'**il comprend :
un arc de verrouillage (3362) formé sur une partie arrière dudit verrou à pas (336) faisant face au bras de déclenchement (333),
un bras de verrouillage (338) qui entre dans l'arc de verrouillage (3362) et sort de l'arc de verrouillage (3362),
un engrenage à pas (110) sur lequel est situé un canal de liaison (111), l'engrenage à pas (110) étant fixé sur ledit cadre intérieur (100) et venant en prise avec l'engrenage (335) au moyen d'une structure rainurée de celui-ci,
un élément de liaison (250) qui se déplace dans le canal de liaison (111) dudit engrenage à pas (110) et s'étend dans le canal de liaison à partir du cadre extérieur (200) au moyen d'un deuxième trou (230).

2. Mécanisme de réglage de position (1) selon la revendication 1, **caractérisé en ce qu'**il comprend une fourchette de verrouillage (112) qui relie ledit engrenage à pas (110) au cadre intérieur (100).

3. Mécanisme de réglage de position (1) selon la revendication 2, **caractérisé en ce qu'**il comprend une fourchette de verrouillage (112) qui est en une seule pièce avec ledit engrenage à pas (110) et qui est formée par un procédé de flexion.

4. Mécanisme de réglage de position (1) selon la revendication 2, **caractérisé en ce que** ladite fourchette de verrouillage (112) comprend un canal de liaison (111) qui a une forme incurvée par rapport au côté vertical (113).

5. Mécanisme de réglage de position (1) selon la revendication 1, **caractérisé en ce qu'**il comprend un élément de boîtier (120) qui est verrouillé avec ledit engrenage à pas (110).

6. Mécanisme de réglage de position (1) selon la revendication 5, **caractérisé en ce que** ledit élément de boîtier (120) comprend des surfaces dentelées (114).

7. Mécanisme de réglage de position (1) selon la revendication 6, **caractérisé en ce qu'**il comprend un élément de boîtier (120) en plastique et en matériaux à base de plastique.
